# EUROPÄISCHE PATENTSCHRIFT

(11) **EP 4 599 183 B1**
(45) Veröffentlichungstag und Bekanntmachung des Hinweises auf die Patenterteilung: **26.08.2026**
(21) Anmeldenummer: 23783357.9
(22) Anmeldetag: 29.09.2023
(51) Int. Cl.: F16L 37/56, F16L 37/20, F16L 33/22, F16L 37/18, A01J 5/04

(54) **SCHLAUCH-SCHNELLKUPPLUNG FÜR MINDESTENS EINEN SCHLAUCH**
QUICK COUPLING FOR AT LEAST ONE HOSE
RACCORD RAPIDE POUR AU MOINS UN TUYAU

(30) Priorität: 06.10.2022 DE 102022125845
(43) Veröffentlichungstag der Anmeldung: 13.08.2025
(73) Patentinhaber: GEA Farm Technologies GmbH, 59199 Bönen (DE)
(72) Erfinder: WIETHOFF, Magnus, 59514 Welver (DE); SCHÜRMANN, Benedikt, 48301 Nottuln (DE)
(74) Vertreter: Kleine, Hubertus
(86) Internationale Anmeldenummer: PCT/EP2023/077097
(87) Internationale Veröffentlichungsnummer: WO 2024/074426

(56) Entgegenhaltungen:
- EP-A1- 0 843 120
- DE-U1- 29 509 132
- DE-U1- 9 190 145
- US-A1- 2005 285 390

## Beschreibung

Die Erfindung betrifft eine Schlauch-Schnellkupplung zur Verbindung bzw. Trennung mindestens zweier Leitungsenden von Leitungen für flüssige oder gasförmige Medien, von denen mindestens eine ein elastischer Schlauch ist, mit einem ersten Kupplungsteil und einem zweiten Kupplungsteil, die mechanisch miteinander koppelbar sind.

Eine Schlauchkupplung dient dem Anschließen, also Verbinden bzw. Trennen eines Schlauchs an einer Verbindungsstelle. Wenn dieses schnell und werkzeuglos möglich ist, wird von einer Schlauch-Schnellkupplung gesprochen.

Solche Schlauch-Schnellkupplungen werden auch im Bereich von Melkmaschinen eingesetzt, beispielsweise um die Milchschläuche von einem Melkzeug am Melkstand oder einer anderen Milchsammeleinrichtung an- bzw. abkoppeln zu können. Eine Schlauch-Schnellkupplung für ein Melkzeug ist bevorzugt so ausgebildet, dass mehrere Schlauchverbindungen gleichzeitig geöffnet bzw. getrennt werden können, beispielsweise vier Melkschläuche für die vier Zitzen eines Kuheuters sowie eine oder mehrere Vakuum- und/oder Reinigungsmittelleitungen. Dabei sind Anforderungen von Lebensmittelregularien zu berücksichtigen, beispielsweise sind die Schlauch-Schnellkupplungen so auszugestalten, dass keine oder nur möglichst kleine Toträume entstehen, in denen sich Milchreste festsetzen können.

Eine Milchschlauchkupplung ist beispielsweise aus der Druckschrift WO 2007/098 959 A1 bekannt. Bei dieser Kupplung werden zwei Kupplungsteile miteinander durch kooperierende Verriegelungsmittel verbunden. Mindestens ein Kupplungsteil weist eine Dichtung auf, die einen Durchgang der Kupplungsteile nach außen abdichtet. Weiter ist mindestens eines der beiden Kupplungsteile so ausgebildet, dass ein Milchschlauch auf einen Rohrstutzen aufgesteckt werden kann und mittels einer Überwurfmutter auf dem Rohrstutzen festgeklemmt wird. Die Anordnung ist jedoch nur für einen einzelnen Schlauch geeignet - eine Schnellkupplung, bei der gleichzeitig mehrere Schläuche verbunden bzw. getrennt werden, ist in der Schrift nicht offenbart und ist mit dem beschriebenen Kopplungsprinzip der beiden Kupplungsteile auch nicht umsetzbar.

Eine allgemein für hydraulische oder pneumatische Systeme einsetzbare Schlauchkupplung ist in der Druckschrift EP 0 843 120 A1 offenbart. Bei dieser Kupplung wird auf das Ende einer der Schläuche außen eine Hülse aufgesetzt, deren Innendurchmesser dem Außendurchmesser des Schlauchs entspricht. Innen in den Schlauch wird ein Rohrnippel eingepresst, wobei der Schlauch zwischen dem Rohrnippel und der Hülse geklemmt wird. Der andere Schlauch endet in einem Rohstutzen, der zur Verbindung der Schläuche in den Rohrnippel eingeschoben wird. Zur Dichtung des Systems ist zwischen dem Rohstutzen und dem Rohrnippel ein Dichtring vorhanden, der in einer Nut des Rohstutzens gehalten ist. In dem Bereich zwischen dem Dichtring und dem Ende des Rohrstutzen ist dadurch ein Totraum gebildet.

Es ist eine Aufgabe der vorliegenden Erfindung, eine Schlauch-Schnellkupplung der eingangs genannten Art bereitzustellen, die auf einfache Weise für das Verbinden bzw. Trennen von mehreren Schläuchen gleichzeitig genutzt werden kann und in deren Durchlassweg für das Medium Toträume möglichst vermieden sind.

Diese Aufgabe wird durch eine Schlauch-Schnellkupplung mit den Merkmalen von Anspruch 1 gelöst. Vorteilhafte Ausgestaltungen und Weiterbildungen sind Gegenstand der abhängigen Ansprüche.

Eine erfindungsgemäße Schlauch-Schnellkupplung zeichnet sich dadurch aus, dass das erste Kupplungsteil mindestens einen hervorstehenden Rohrstutzen als Leitungsende aufweist, und das zweite Kupplungsteil den mindestens einen Schlauch als Leitungsende aufweist, in den endseitig ein rohrförmiger Einsatz eingesetzt ist, wobei bei gekoppelten Kupplungsteilen der mindestens eine Rohrstutzen des ersten Kupplungsteils durch den Einsatz des zweiten Kupplungsteils geführt ist, so dass der Einsatz den Rohrstutzen führt, und in Schlauchrichtung über den Einsatz hinausragt, und eine Dichtfläche zwischen einer äußeren Mantelfläche des mindestens einen Rohrstutzens und einer Innenfläche des mindestens einen Schlauchs gebildet ist.

Erfindungsgemäß stellt der von der Schlauchkupplung zu verbindende bzw. zu trennende Schlauch selbst die Abdichtung zum anderen Leitungsende dar, das von einem Rohrstutzen gebildet ist. Eine zusätzliche Dichtung, die gewartet bzw. regelmäßig getauscht werden müsste, ist dadurch nicht erforderlich. Zudem werden weitere potentielle Totvolumina im Bereich einer separaten Dichtung vermieden. Der Einsatz vereinfacht das Einführen des Rohrstutzens in das Schlauchende. Durch Abstimmung der Längen des Einsatzes und des Rohrstutzens wird erreicht, dass der Rohrstutzen dennoch das Material des Schlauchs erreicht, wodurch eine Abdichtung erfolgen kann.

In einer vorteilhaften Ausgestaltung der Schlauch-Schnellkupplung verringert sich ein Innendurchmesser des Einsatzes in der Schlauchrichtung. Der Einsatz wird dadurch trichterförmig, was die Einführung des Rohrstutzens erleichtert. Es wird zudem eine Zentrierung erzielt, wenn die beiden Kupplungsteile mit nicht ganz korrekter Ausrichtung zusammengefügt werden. Weiter vorteilhaft verringert sich auch ein Außendurchmesser des Einsatzes in der Schlauchrichtung. Dadurch kann der Einsatz im Schlauch festklemmen, bzw. sitzt der Schlauch fester auf dem Einsatz.

In einer weiteren vorteilhaften Ausgestaltung der Schlauch-Schnellkupplung weist der Einsatz an seinem entgegen der Schlauchrichtung weisenden Ende einen nach außen ragenden Kragen auf. Dieser bildet einen Anschlag für den Schlauch und verhindert, dass der Einsatz von dem Rohrstutzen in den Schlauch geschoben werden kann. Weiter bevorzugt verringert sich eine Wandstärke des Einsatzes zu seinem in Schlauchrichtung weisenden Ende hin. Eine Stufe am Übergang zwischen dem Ende des Einsatzes und dem Schlauch wird so möglichst klein gehalten, wodurch ein mögliches Ansetzen von Verschmutzungen verhindert wird.

In einer weiteren vorteilhaften Ausgestaltung der Schlauch-Schnellkupplung weist das zweite Kupplungsteil mindestens eine Tülle zur Aufnahme des Endes des mindestens einen Schlauchs und zu seiner Positionierung auf. Bevorzugt wird der Schlauch durch den Einsatz an eine innere Wandung der Tülle gedrückt, wodurch er belastbar in der Tülle gehalten wird und auch beim Aufschieben auf den Rohrstutzen nicht aus der Tülle gedrückt wird.

In einer weiteren vorteilhaften Ausgestaltung der Schlauch-Schnellkupplung weist das erste Kupplungsteil mindestens zwei hervorstehende Rohrstutzen als Leitungsenden auf und das zweite Kupplungsteil mindestens zwei Schläuche, in die endseitig jeweils ein rohrförmiger Einsatz eingesetzt ist, wobei jeweils einer der Rohrstutzen in einen der Schläuche eingeführt ist. Bevorzugt sind entsprechend mindestens zwei Tüllen zur Aufnahme und Positionierung der Schläuche vorhanden. Weiter bevorzugt sind die mindestens zwei Tüllen in einem gemeinsamen Schlauchblock ausgebildet, der in einem vorderen Abschnitt des zweite Kupplungsteils angeordnet ist. Die Schlauch-Schnellkupplung kann zum Verbinden bzw. Trennen mehrerer Schläuche genutzt werden. Das Grundprinzip kann leicht auf eine Mehrzahl von Schläuchen erweitert werden, da zum Verbinden eine einfache Schiebebewegung erforderlich ist, die gleichermaßen dann bei allen Rohrstutzen bzw. Schläuchen synchron vorgenommen wird.

In einer weiteren vorteilhaften Ausgestaltung der Schlauch-Schnellkupplung weisen das erste und das zweite Kupplungsteil Führungselemente auf, die die beiden Kupplungsteile beim Koppeln linear zueinander führen. So wird ein Ineinanderstecken der beiden Teile in einer korrekten Position und Ausrichtung erreicht.

In einer weiteren vorteilhaften Ausgestaltung der Schlauch-Schnellkupplung weisen das erste und das zweite Kupplungsteil einen zusammenwirkenden Verriegelungsmechanismus auf. So können die beiden Kupplungsteile mechanisch gesichert zusammengehalten werden. Der Verriegelungsmechanismus kann z.B. einen an einem der beiden Kupplungsteile angelenkten Schwenkhebel aufweist, der als ein Winkelhebel mit einem Griffteil und einem Verschlussteil ausgebildet ist, wobei das Verschlussteil mit einem an dem anderen der beiden Kupplungsteile angeordneten Bolzen zusammenwirkt. Bevorzugt weist das Verschlussteil eine Kurvenbahn auf, in der der Bolzen geführt ist, wobei die Kurvenbahn insbesondere so geformt ist, dass beim Zuschwenken des Schwenkhebels die beiden Kupplungsteile aufeinander zu gezogen werden. Weiter vorteilhaft ist in der Kurvenbahn eine Vertiefung ausgebildet, in der sich der Bolzen bei gekoppelten Kupplungsteilen befindet. Eine extern auf das zweite Kupplungsteil wirkende Zugkraft oder auch zwischen den Schläuchen und den Rohrstutzen auftretende Kräfte, wirken durch die Vertiefung selbstschließend auf den Schwenkhebel, so dass dieser durch Zugkräfte in die eingeschwenkte Stellung gedrückt und nicht etwa aufgeschwenkt wird.

Zudem kann eine Verrastung und/oder Verriegelung des Schwenkhebels in vorbestimmten Schwenkpositionen vorgesehen sein. Die Verrastung und/oder Verriegelung vermindert die Gefahr einer unbeabsichtigten Entkopplung weiter.

Die Erfindung wird nachfolgend anhand eines Ausführungsbeispiels mithilfe von Figuren näher erläutert. Die Figuren zeigen:
- Fig. 1 a,: b eine Schlauch-Schnellkupplung in jeweils einer räumlichen Darstellung aus zwei verschiedenen Blickrichtungen;
- Fig. 1c: eine Seitenansicht der Schlauch-Schnellkupplung der Fig. 1a, b;
- Fig. 2: eine räumliche Darstellung eines ersten Kupplungsteils der Schlauch-Schnellkupplung der Fig. 1a-c;
- Fig. 3a, b: jeweils eine räumliche Darstellung eines zweiten Kupplungsteils der Schlauch-Schnellkupplung der Fig. 1a-c;
- Fig. 4a: eine räumliche Schnittdarstellung eines Schlauchblocks der Schlauch-Schnellkupplung der Fig. 1a-c;
- Fig. 4b: eine Schnittdarstellung des Schlauchblocks der Schlauch-Schnellkupplung der Fig. 1a-c;
- Fig. 5a-c: Seitenansichten des zweiten Kupplungsteils der Schlauch-Schnellkupplung der Fig. 1a-c; in verschiedenen Schwenkstellungen eines Schwenkhebels; und
- Fig. 6: eine Seitenansicht des zweiten Kupplungsteils ähnlich den Fig. 5a-c, jedoch ohne den Schwenkhebel.

In den nachfolgend beschriebenen Figuren ist ein Ausführungsbeispiel einer Schlauch-Schnellkupplung gezeigt, die der schnellen Verbindung bzw. Trennung von sechs Schläuchen dient. Es wird angemerkt, dass diese Anzahl rein beispielhaft ist und die Schlauch-Schnellkupplung auch an eine kleinere oder größere Anzahl von Schläuchen, die anzukuppeln bzw. zu trennen sind, angepasst werden kann.

Die dargestellte Schlauch-Schnellkupplung ist zur Verwendung in der Melktechnik geeignet. Es werden vier milchführende und zwei weitere Schläuche verbunden bzw. getrennt. Die weiteren Schläuche können z.B. Unterdruck und eine Reinigungsflüssigkeit führen. Es versteht sich, dass die dargestellte Schlauch-Schnellkupplung auch in anderen Anwendungsbereich eingesetzt werden kann.

In allen Figuren kennzeichnen gleiche Bezugszeichen gleiche Elemente. Aus Gründen der Übersichtlichkeit sind nicht in allen Figuren alle Elemente mit Bezugszeichen versehen.

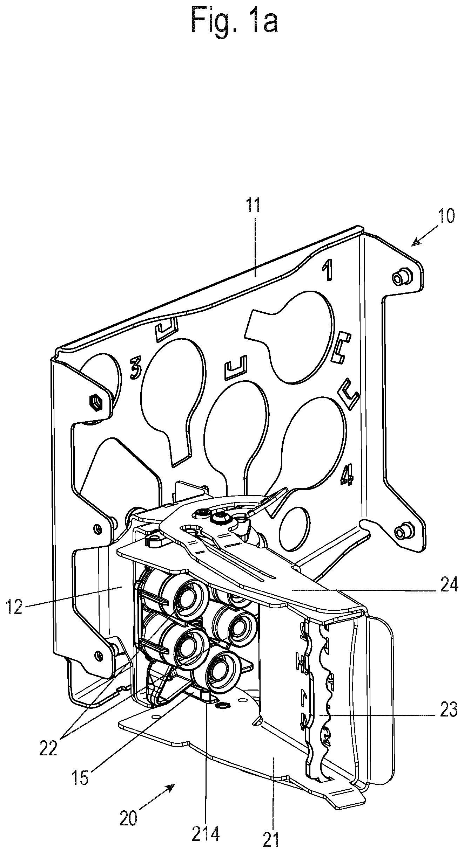

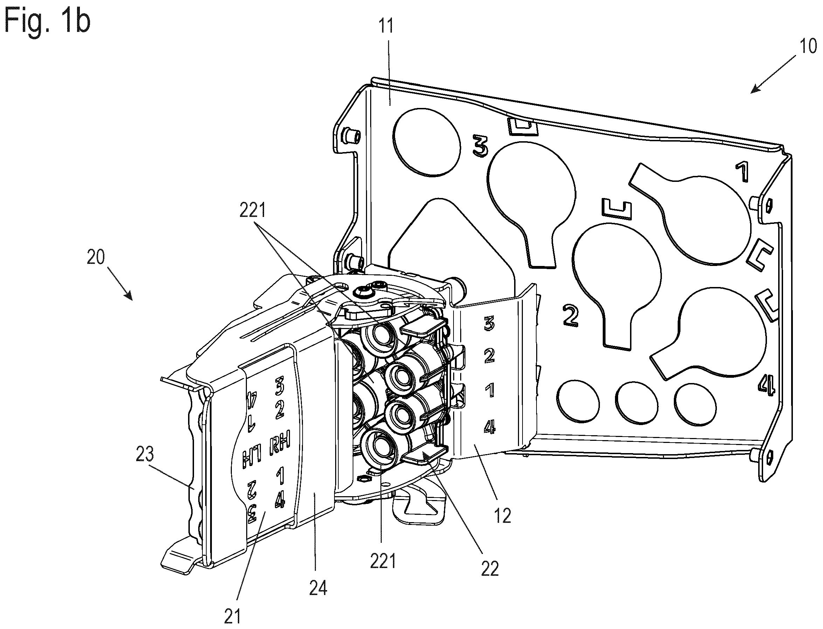

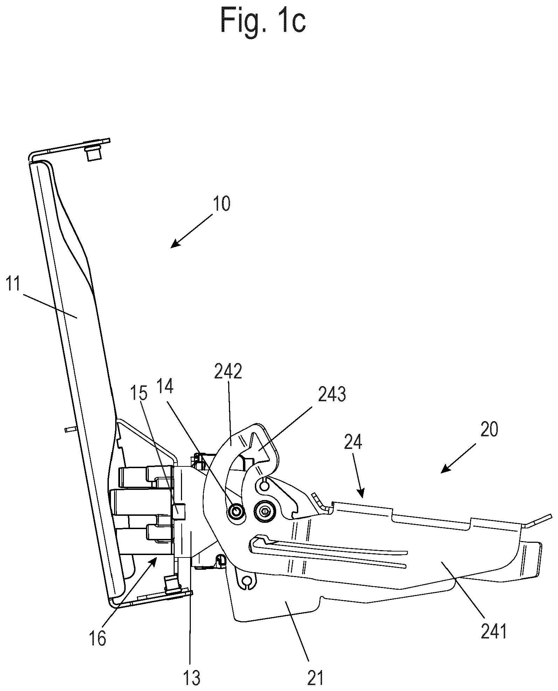

Die Figuren 1a und 1b zeigen die Schlauch-Schnellkupplung in jeweils einer räumlichen Darstellung aus zwei verschiedenen Blickrichtungen. Die Figur 1c zeigt eine Seitenansicht der Schlauch-Schnellkupplung.

Die Schlauch-Schnellkupplung weist zwei Kupplungsteile auf, ein erstes Kupplungsteil 10 und ein zweites Kupplungsteil 20. Im gezeigten Beispiel ist das erstes Kupplungsteil 10 als fest eingebautes Kupplungsteil in beispielsweise einem Melkstand ausgebildet. Es umfasst eine Montageplatte 11, die vorliegend Aufnahmemöglichkeiten für Ventile oder Ähnliches bereitstellt, die nicht Teil der Schlauch-Schnellkupplung sind. In anderen Ausgestaltungen kann die Montageplatte 11 kleiner und ohne die zusätzlichen Aufnahmemöglichkeiten für weitere Komponenten ausgebildet sein. Auch ist es denkbar, dass erstes Kupplungsteil nicht für einen festen Einbau in einer Anlage ausgebildet ist.

Auf der Montageplatte 11 ist ein Pult 12 montiert, das einen Rohrstutzenblock 16 trägt, aus dem mindestens ein, vorliegend beispielhaft sechs Rohrstutzen 17 hervorstehen - jeweils einer der Rohrstutzen 17 für jeden zu trennenden Schlauch der Schnellkupplung.

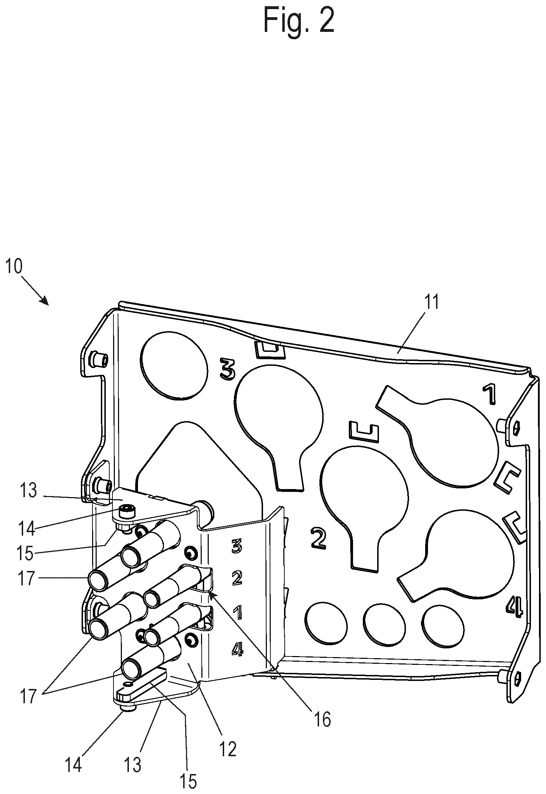

Die Rohrstutzen 17 sind gut in Figur 2 erkennbar, in der das erstes Kupplungsteil 10 ohne aufgesetztes zweites Kupplungsteil 20 separat räumlich dargestellt ist. Neben den hervorstehenden Rohrstutzen 17 weist das Pult 12 abgekantete Seitenwangen 13 auf, in denen jeweils ein Bolzen 14 angeordnet ist. Die Bolzen 14 dienen der mechanischen Verriegelung des zweites Kupplungsteils 20, wie nachfolgend noch näher erläutert wird. Die hinteren, in Richtung der Montageplatte 11 weisenden Ende der Rohrstutzen 17 sind mit anlagenseitigen Leitungen verbunden. Die anlagenseitigen Leitungen können ihrerseits Schläuche sein, aber auch Rohre.

Das zweite Kupplungsteil 20 ist hier als lösbares Kupplungsteil ausgebildet, an dem Schläuche montiert sind, die beispielsweise zu einem Melkzeug führen. Die Schlauch-Schnellkupplung bietet die Möglichkeit, dieses zweites Kupplungsteil 20 und damit zum Beispiel das Melkzeug, mit wenig Aufwand vom ersten Kupplungsteil 10 zu lösen, wobei die hier gezeigten sechs Leitungen getrennt werden. Zur mechanischen Führung beim Zusammenfügen der beiden Kupplungsteile 10, 20 sind am ersten Kupplungsteil 10 Führungsstege 15 ausgebildet und am zweiten Kupplungsteil 20 Führungsnuten 214, die ineinandergreifen und eine Art Linearführung bilden. Es wird auf diese Weise ein Ineinanderstecken der beiden Teile in einer korrekten Position und Ausrichtung erreicht. Beim vorliegenden Ausführungsbeispiel sind die Bolzen 14 Schraubenköpfe von Schrauben, die in die sich auf der anderen Seite der Seitenwange 13 befindenden Führungsstege 15 eingeschraubt sind, die entsprechend dadurch an jeweils einem ihrer Enden befestigt werden. Das jeweils andere Ende der Führungsstege 15 wird an dem Pult 12 befestigt, indem es in eine Aussparung eingeschoben ist.

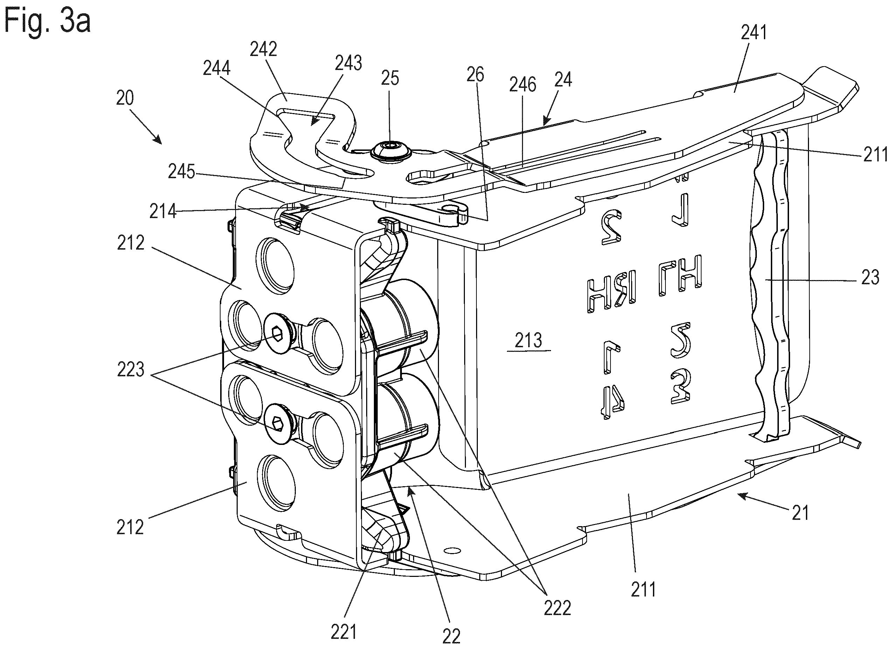

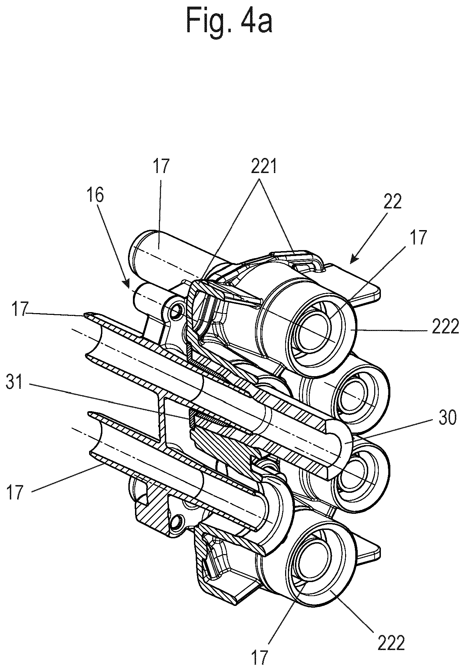

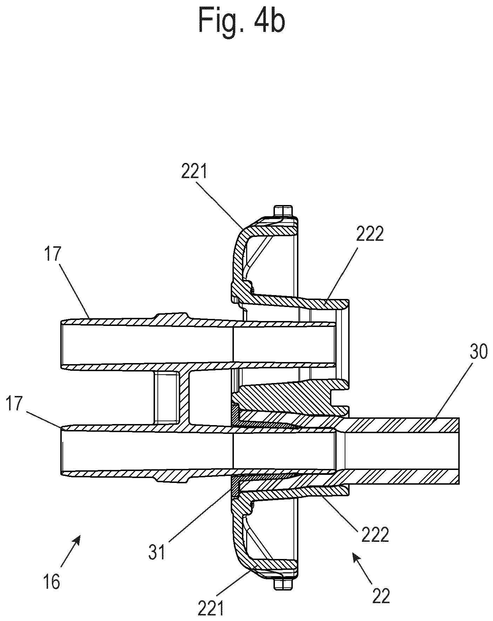

Das zweite Kupplungsteil 20, das in Figur 3a separat vom ersten Kupplungsteil 10 in einer räumlichen Darstellung gezeigt ist, weist einen u-förmigen Träger 21 auf, der beispielsweise als Stanz-/Biegeteil aus Blech gefertigt ist. Der Träger 21 umfasst eine Basisplatte 213 und Seitenwangen 211. Diese sind in einem zum ersten Kupplungsteil 10 weisenden vorderen Abschnitt abgekantet und bilden so zwei Frontplatten, die zusammen eine Front 212 darstellen. Es wird angemerkt, dass diese Front 212 auch einteilig durch eine durchgehende Platte gebildet sein kann. Hinter der Front 212 ist ein Schlauchblock 22 angeordnet, der seitlich in den Träger 21 eingeschoben werden kann und mittels Schrauben 223 von Seiten der Front 212 her er befestigt werden kann. An diesem Schlauchblock 22 werden Schläuche montiert, wie im Zusammenhang mit den Figuren 4a und 4b noch näher erläutert wird. Die Schläuche verlaufen dann gut geschützt in dem u-förmigen Träger 21, wobei im hinteren Bereich des Trägers 21 ein Schlauchklemmbügel 23 eingesetzt ist, mit dessen Hilfe die Schläuche im Träger 21 fixiert sind. Der Schlauchklemmbügel 23 dient auch als Zugentlastung, damit die Schläuche nicht aus dem Schlauchblock 22 gezogen werden können.

Den Träger 21 von einer Seite umgreifend ist ein ebenfalls u-förmig aufgebauter Schwenkhebel 24 drehbar um eine Drehachse 25 befestigt. Die Drehachse 25 wird durch Bolzen bzw. Schrauben gebildet, die in die Seitenwand 211 montiert sind, beispielsweise eingeschraubt sind.

Der Schwenkhebel 24 ist als ein Winkelhebel ausgebildet und weist ein Griffteil 241 und ein Verschlussteil 242 auf. Das Verschlussteil 242 ist mit einer Aussparung 243 versehen. Zum Koppeln des ersten und des zweiten Kupplungsteils 10, 20 wird das zweite Kupplungsteil 20 mit aufgeschwenktem Schwenkhebel 24 auf das erste Kupplungsteil 10 gesetzt. Ein vorderes Ende des jeweiligen Verschlussteils 242 ist nach außen abgewinkelt und die Aussparung 243 ist jeweils verbreitert. So werden zwei Fangtrichter 244 geformt, durch die die Bolzen 14 des erstes Kupplungsteils 10 in die Aussparung 243 eingeführt werden können. Das Griffteil 241 wird dann an die Basisplatte 213 des Trägers 21 geschwenkt, wodurch auf beiden Seiten der Kupplungsteile 10, 20 jeweils der Rand einer Kurvenbahn der Aussparung 243 den Bolzen 14 greift und das zweites Kupplungsteil 20 an das erstes Kupplungsteil 10 heranzieht. Der Schwenkhebel 24 und die Bolzen 14 wirken somit in Art eines Winkelhebel-Verschlusses zusammen. Dabei nehmen die Führungsnuten 214 bzw. die Führungsstege 15 auftretende Querkräfte, die aus der Verriegelungsbewegung entstehen, auf.

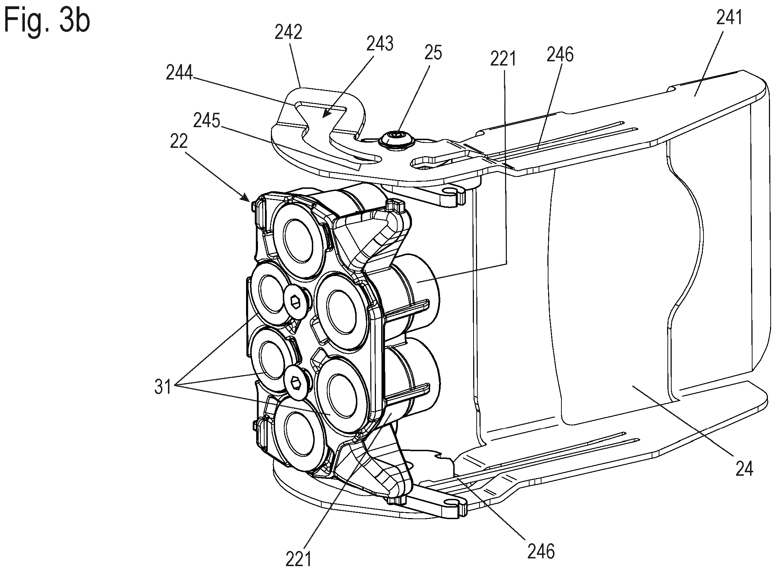

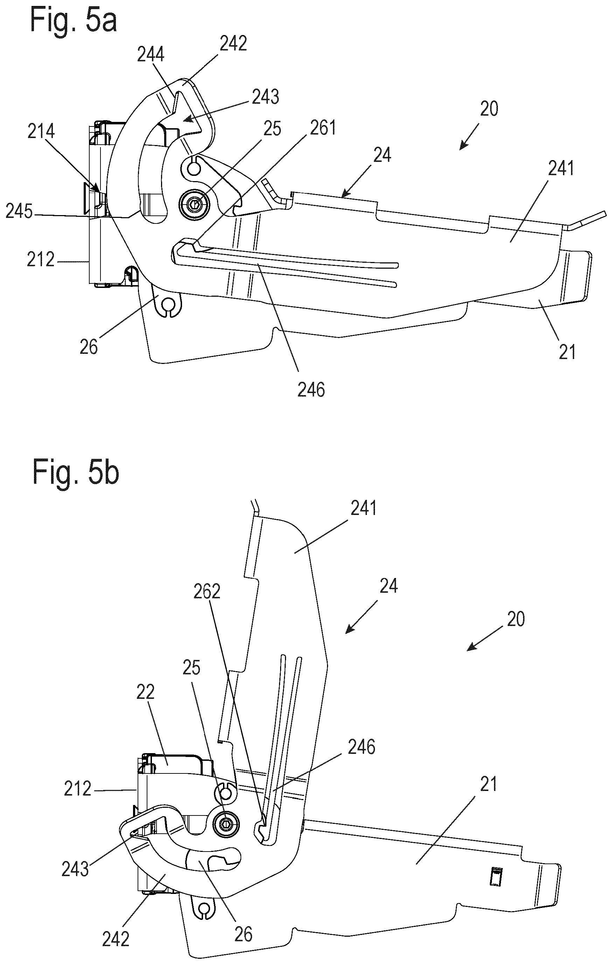

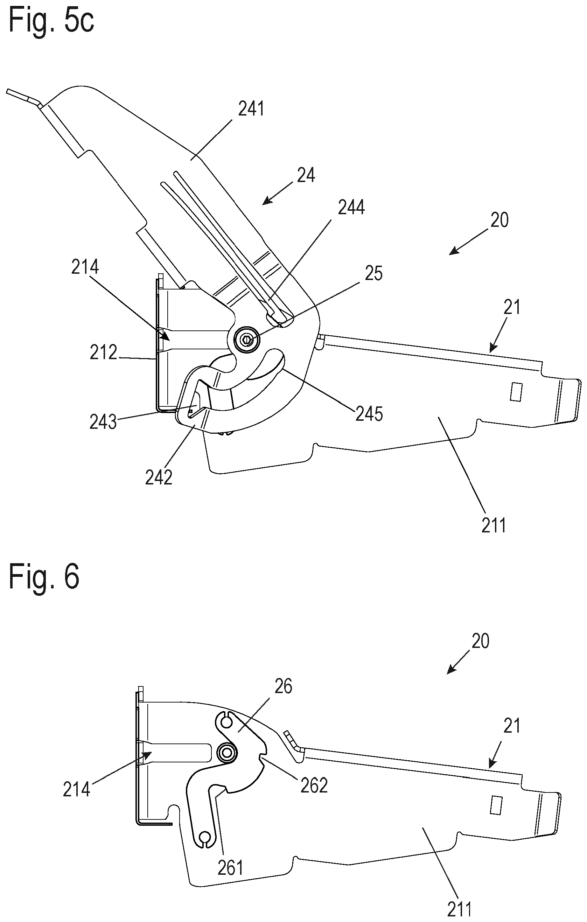

Figur 3b zeigt zur Verdeutlichung des Aufbaus des zweites Kupplungsteils 20 dieses in gleicher Art wie in Figur 3a, wobei jedoch der Träger 21 ausgeblendet ist. Im Griffteil 241 des Schwenkhebels 24 sind Rastzungen 246 freigestanzt, die ein ungewolltes Lösen des zweites Kupplungsteils 20 vom erstes Kupplungsteil 10 verhindern. Diese Funktionalität wird im Zusammenhang mit den Figuren 5a bis 5c und 6 nachfolgend noch detaillierter erläutert.

Die Figuren 4a und 4b zeigen den Schlauchblock 22 separat detaillierter und illustrieren die Positionierung eines Schlauchs 30 in dem Schlauchblock 22 und damit das Dichtungsprinzip der Schlauch-Schnellkupplung. Figur 4a zeigt den Schlauchblock 22 in einer räumlichen teilgeschnittenen Ansicht zusammen mit einem entsprechend geschnittenen Abschnitt des Rohrstutzenblocks 16 des erstes Kupplungsteils 10. Die Positionierung des Rohrstutzenblock 16 und des Schlauchblocks 22 zueinander entspricht der Positionierung im gekoppelten Zustand der beiden Kupplungsteile 10, 20. In Figur 4b ist die Schnittfläche aus Figur 4a nochmals in einer Seitenansicht des geschnittenen Schlauchblocks 22 dargestellt.

Der Schlauchblock 22 weist einen Träger 221 auf, in dem eine Mehrzahl von Tüllen 222 ausgeformt ist. Die Tüllen 222 entsprechen in Anzahl und Positionierung den Rohrstutzen 17 des Rohrstutzenblocks 16. Mit anderen Worten liegen jeweils ein Rohrstutzen 17 und eine Tülle 222 auf einer gemeinsamen Mittellachse.

Beispielhaft ist in den Schlauchblock 22 nur bei einer der Tüllen 222 ein Schlauch 30 montiert. Zur Montage des Schlauchs 30 wird dieser mit einem freien Ende in die Tülle 222 eingeschoben und zwar von der hinteren, zum Schlauchklemmbügel 23 weisenden Seite. Von der vorderen Seite der Tülle 222 wird dann ein Einsatz 31 in das Schlauchende eingeschoben, der den Schlauch 30 in diesem Bereich aufspreizt und an eine innere Mantelfläche der Tülle 222 drückt. Der Einsatz 31 ist im dargestellten Beispiel leicht trichterförmig geformt. An seinen vorderen, in den Schlauch 30 eingeschoben Ende verjüngt sich eine Wandstärke des Einsatzes 31, so dass nahezu keine Übergangsstufe zwischen dem Ende des Einsatzes 31 und die der Innenseite des Schlauchs 30 entsteht.

Durch den Einsatz 31 wird der jeweilige Schlauch in der Tülle 222 befestigt, wobei durch Einschieben des Schlauchblocks 22 in den Träger 21 der Kragen des Einsatzes 31 innen an der Front 212 anliegend und damit gegen ein Herausrutschen aus der jeweiligen Tülle 222 bzw. dem jeweiligen Schlauch 30 gesichert ist.

Zur Verbindung aller durch die Schlauch-Schnellkupplung zu trennenden bzw. zu verbindenden Schläuche 30 werden diese entsprechend in den entnommenen Schlauchblock 22 in die jeweiligen Tülle 222 eingesetzt und durch Einstecken jeweils eines Einsatzes 31 fixiert. Der Schlauchblock 22 mit den angeschlossenen Schläuchen 30 wird dann in den Träger 21 eingesetzt und die Schläuche 30 durch den Schlauchklemmbügel 23 zusätzlich gesichert.

Wie in den Figuren 4a und 4b ersichtlich ist, werden beim Aufsetzen des zweiten Kupplungsteils 20 auf das erste Kupplungsteil 10 die Rohrstutzen 17 durch die Einsätze 31 geführt, wobei die Rohrstutzen 17 in ihrer Länge so dimensioniert sind, dass sie bei vollständig aufgesetztem zweiten Kupplungsteil 20 aus dem Einsatz 31 hinausragen und mit einem ringförmigen Abschnitt ihrer äußeren Mantelfläche unmittelbar an einem umlaufenden Abschnitt der Innenfläche des jeweiligen Schlauchs 30 anliegen. An dieser Stelle erfolgt eine umlaufende Abdichtung zwischen dem Schlauch 30 und dem jeweiligen Rohrstutzen 17 aufgrund der Elastizität des Schlauchs 30. Eine zusätzliche Dichtung, die gewartet bzw. regelmäßig getauscht werden müsste, ist nicht erforderlich. Zudem werden weitere potentielle Totvolumina im Bereich einer separaten Dichtung vermieden.

In den Figuren 5a bis 5c ist das zweite Kupplungsteil 20 jeweils in einer Seitenansicht bei verschiedenen Schwenkstellungen des Schwenkhebels 24 gezeigt. Die Figur 6 zeigt zur weiteren Erläuterung des Aufbaus das zweite Kupplungsteil 20 ohne den Schwenkhebel 24 in vergleichbarer Seitenansicht wie die Figuren 5a-c.

Um ein ungewolltes Lösen des zweites Kupplungsteils 20 vom ersten Kupplungsteil 10 zu verhindern, ist der Schwenkhebel 24 mit einem Rast- und Verriegelungsmechanismus versehen. Zu diesem Zweck ist aus dem Griffteil 241 an zumindest einer Seite die Rastzunge 246 ausgestanzt, die mit einer Rastplatte 26 zusammenwirkt, die in Figur 6 zu sehen ist und die an der Seitenwange 211 des Trägers 21 befestigt ist. Die Rastplatte 26 weist Rastvertiefungen 261 bzw. 262 auf, in die die Rastzunge 246 des Schwenkhebel 24 in entsprechenden Drehstellungen eingreift.

Bei eingeschwenktem Schwenkhebel 24, also in einer Stellung, in der das erstes und das zweites Kupplungsteil 10, 20 miteinander verbunden sind, greift die Rastzunge 246 mit ihrem am vorderen Ende angeordneten Rasthaken in die Rastvertiefung 261 ein. Die Anlagekante der Rastvertiefung 261, an der der Rasthaken anliegt, ist mit einer leichten Schräge versehen, so dass der Schwenkhebel 24 zwar in der eingeschwenkten Stellung gehalten wird, jedoch bei ausreichendem Betätigungskraft sich der Rasthaken aus der Rastvertiefung 261 hebt und der Schwenkhebel 24 aufgeschwenkt werden kann.

Diese Rastfunktion verhindert, dass der Schwenkhebel 24 zu leicht und damit eventuell versehentlich aufgeschwenkt werden kann. Zudem weist die Aussparung 243 an ihrem dem Fangtrichter 244 entgegengesetzten Ende eine Vertiefung 245 auf, in der sich der Bolzen 14 bei eingeschwenktem Hebel 24 befindet. Eine extern auf das zweite Kupplungsteil 20 wirkende Zugkraft oder auch zwischen den Schläuchen 30 und den Rohrstutzen 17 auftretende Kräfte wirken durch die Vertiefung 245 selbstschließend auf den Schwenkhebel 24, d.h. dieser wird durch Zugkräfte in die eingeschwenkte Stellung gedrückt und nicht etwa aufgeschwenkt.

Das händische Aufschwenken ist bis zu der in Figur 5b wiedergegebenen Position möglich. In dieser Stellung greift der Rasthaken der Rastzunge 246 in die weitere Rastvertiefung 262 ein. In dieser Stellung können die beiden Kupplungsteile 10, 20 voneinander getrennt werden. Die weitere Rastvertiefung 262 ist so geformt, dass ein weiteres Aufschwenken des Schwenkhebels 24 nicht möglich ist. Die Rastzunge 246 und die weitere Ratsvertiefung 262 wirken in Richtung des weiteren Aufschwenkens wie ein Anschlag.

Figur 5c zeigt eine Montagestellung des Schwenkhebels 24. Die Rastplatte 26 ist so geformt ist, dass die Rastzunge 246 in dieser Schwenkstellung nicht vorgespannt ist. Daher kann der Schwenkhebel 24 in dieser Stellung leicht an den Träger 21 anmontiert werden. Nach der Montage wird der Schwenkhebel eingeschwenkt, wobei die Rastzunge 246 vorgespannt wird und in die weitere Rastvertiefung 262 gemäß Figur 5b einrastet. Für die folgende Nutzung des zweiten Kupplungsteils 20 wird der Schwenkhebel durch den Anwender dann nur noch zwischen den in den Figuren 5a und 5b gezeigten Stellungen verschwenkt.

### Bezugszeichenliste

- 10: erstes Kupplungsteil (fest)
- 11: Montageplatte
- 12: Pult
- 13: Seitenwange
- 14: Bolzen
- 15: Führungssteg
- 16: Rohrstutzenblock
- 17: Rohrstutzen

- 20: zweites Kupplungsteil (lösbar)
- 21: Träger (u-förmig)
- 211: Seitenwange
- 212: Front
- 213: Basisplatte
- 214: Führungsnut
- 22: Schlauchblock
- 221: Träger
- 222: Tülle
- 223: Schraube
- 23: Schlauchklemmbügel
- 24: Schwenkhebel
- 241: Griffteil
- 242: Verschlussteil
- 243: Aussparung
- 244: Fangtrichter
- 245: Vertiefung
- 246: Rastzunge
- 25: Drehachse
- 26: Rastplatte
- 261: Rastvertiefung
- 262: weitere Rastvertiefung

- 30: Schlauch
- 31: Einsatz

## Patentansprüche

1. Schlauch-Schnellkupplung zur Verbindung bzw. Trennung mindestens zweier Leitungsenden von Leitungen für flüssige oder gasförmige Medien, von denen mindestens eine ein elastischer Schlauch (30) ist, aufweisend ein erstes und ein zweites koppelbares Kupplungsteil (10, 20), die mechanisch miteinander koppelbar sind, wobei
- das erste Kupplungsteil (10) mindestens einen hervorstehenden Rohrstutzen (17) als Leitungsende aufweist, und
- das zweite Kupplungsteil (20) den mindestens einen Schlauch (30) als Leitungsende aufweist, in den endseitig ein rohrförmiger Einsatz (31) eingesetzt ist,
wobei
- bei gekoppelten Kupplungsteilen (10, 20) der mindestens eine Rohrstutzen (17) des ersten Kupplungsteils (10) durch den Einsatz (31) des zweiten Kupplungsteils geführt ist, so dass der Einsatz (31) den Rohrstutzen (17) führt,
**dadurch gekennzeichnet, dass** bei gekoppelten Kupplungsteilen (10, 20) der mindestens eine Rohrstutzen (17) in Schlauchrichtung über den Einsatz (31) hinausragt, und
- eine Dichtfläche zwischen einer äußeren Mantelfläche des mindestens einen Rohrstutzens (17) und einer Innenfläche des mindestens einen Schlauchs (30) gebildet ist.

2. Schlauch-Schnellkupplung nach Anspruch 1, bei der sich ein Innendurchmesser des Einsatzes (31) in der Schlauchrichtung verringert.

3. Schlauch-Schnellkupplung nach Anspruch 1 oder 2, bei der sich ein Außendurchmesser des Einsatzes (31) in der Schlauchrichtung verringert.

4. Schlauch-Schnellkupplung nach einem der Ansprüche 1 bis 3, bei der der Einsatz (31) zu seinem entgegen der Schlauchrichtung weisenden Ende einen nach außen ragenden Kragen aufweist.

5. Schlauch-Schnellkupplung nach einem der Ansprüche 1 bis 4, bei der sich eine Wandstärke des Einsatzes (31) zu seinem in Schlauchrichtung weisenden Ende verringert.

6. Schlauch-Schnellkupplung nach einem der Ansprüche 1 bis 5, bei der das zweite Kupplungsteil (10) mindestens eine Tülle (222) zur Aufnahme des Endes des mindestens einen Schlauchs (30) und zu seiner Positionierung aufweist.

7. Schlauch-Schnellkupplung nach Anspruch 6, bei der der Schlauch (30) durch den Einsatz (31) an eine innere Wandung der Tülle (222) gedrückt wird.

8. Schlauch-Schnellkupplung nach einem der Ansprüche 1 bis 7, bei der das erste Kupplungsteil (10) mindestens zwei hervorstehende Rohrstutzen (17) als Leitungsenden aufweist, und das zweite Kupplungsteil (20) mindestens zwei Schläuche (30) aufweist, in den endseitig jeweils ein rohrförmiger Einsatz (31) eingesetzt ist, wobei jeweils einer der Rohrstutzen (17) in einen der Schläuche (30) eingeführt ist.

9. Schlauch-Schnellkupplung nach Anspruch 8, aufweisend mindestens zwei Tüllen (222), wobei jeder der Schläuche (30) in jeweils eine Tülle (222) eingesetzt ist.

10. Schlauch-Schnellkupplung nach Anspruch 9, bei der die mindestens zwei Tüllen (222) in einem gemeinsamen Schlauchblock (22) ausgebildet sind, der in einem vorderen Abschnitt des zweite Kupplungsteils (10) angeordnet ist.

11. Schlauch-Schnellkupplung nach einem der Ansprüche 1 bis 10, bei der das erste und das zweite Kupplungsteil (10, 20) Führungselemente aufweisen, die die beiden Kupplungsteile (10, 20) beim Koppeln linear zueinander führen.

12. Schlauch-Schnellkupplung nach einem der Ansprüche 1 bis 11, bei der das erste und das zweite Kupplungsteil (10, 20) einen zusammenwirkenden Verriegelungsmechanismus aufweisen.

13. Schlauch-Schnellkupplung nach Anspruch 12, bei der der Verriegelungsmechanismus einen an einem der beiden Kupplungsteile (10, 20) angelenkten Schwenkhebel (24) aufweist, der als ein Winkelhebel mit einem Griffteil (241) und einem Verschlussteil (242) ausgebildet ist, wobei das Verschlussteil (242) mit einem an dem anderen der beiden Kupplungsteile (10, 20) angeordneten Bolzen zusammenwirkt.

14. Schlauch-Schnellkupplung nach Anspruch 13, bei der das Verschlussteil (242) eine Kurvenbahn aufweist, in der der Bolzen (14) geführt ist.

15. Schlauch-Schnellkupplung nach Anspruch 14, bei der die Kurvenbahn eine Vertiefung aufweist, in der sich der Bolzen (14) bei gekoppelten Kupplungsteilen (10, 20) befindet.

16. Schlauch-Schnellkupplung nach einem der Ansprüche 13 bis 15, bei der eine Verrastung und/oder Verriegelung des Schwenkhebels (24) in vorbestimmten Schwenkpositionen vorgesehen ist.

## Claims

1. A quick-release hose coupling for connecting and disconnecting at least two line ends of lines for liquid or gaseous media, of which at least one is an elastic hose (30), comprising a first and a second couplable coupling part (10, 20) that can be coupled mechanically to one another, wherein
- the first coupling part (10) has at least one protruding pipe socket (17) as the line end, and
- the second coupling part (20) has the at least one hose (30) as the line end, into the end of which a tubular insert (31) is inserted, whereby
- when the coupling parts (10, 20) are coupled, the at least one pipe socket (17) of the first coupling part (10) is guided through the insert (31) of the second coupling part, such that the insert (31) guides the pipe socket (17),
**characterized in that** when the coupling parts (10, 20) are coupled, the at least one pipe socket (17) projects beyond the insert (31) in the hose direction, and
- a sealing surface is formed between an outer lateral surface of the at least one pipe socket (17) and an inner surface of the at least one hose (30).

2. The quick-release hose coupling according to claim 1, wherein an inside diameter of the insert (31) reduces in the hose direction.

3. The quick-release hose coupling according to claim 1 or 2, in which an external diameter of the insert (31) decreases in the hose direction.

4. The quick-release hose coupling according to one of claims 1 to 3, in which the insert (31) has an outwardly projecting collar towards its end pointing against the hose direction.

5. The quick-release hose coupling according to one of the claims 1 to 4, in which a wall thickness of the insert (31) decreases towards its end pointing in the hose direction.

6. The quick-release hose coupling according to one of claims 1 to 5, in which the second coupling part (10) has at least one grommet (222) for receiving the end of the at least one hose (30) and for positioning it.

7. The quick-release hose coupling according to claim 6, wherein the hose (30) is pressed against an inner wall of the grommet (222) by the insert (31).

8. The quick-release hose coupling according to one of claims 1 to 7, wherein the first coupling part (10) has at least two protruding pipe sockets (17) as line ends, and the second coupling part (20) has at least two hoses (30), in each of the ends of which a tubular insert (31) is inserted, wherein in each case one of the pipe sockets (17) is introduced into one of the hoses (30).

9. The quick-release hose coupling according to claim 8, having at least two grommet (222), each of the hoses (30) being inserted into a respective grommet (222).

10. The quick-release hose coupling according to claim 9, wherein the at least two grommet (222) are formed in a common hose block (22) which is arranged in a front section of the second coupling part (10).

11. The quick-release hose coupling according to one of claims 1 to 10, in which the first and the second coupling part (10, 20) have guide elements which guide the two coupling parts (10, 20) linearly relative to each other during coupling.

12. The quick-release hose coupling according to one of claims 1 to 11, wherein the first and the second coupling part (10, 20) have a co-operating locking mechanism.

13. The quick-release hose coupling according to claim 12, in which the locking mechanism has a swivel lever (24) which is articulated on one of the two coupling parts (10, 20) and is designed as an angle lever with a handle part (241) and a locking part (242), the locking part (242) interacting with a bolt arranged on the other of the two coupling parts (10, 20).

14. The quick-release hose coupling according to claim 13, wherein the locking part (242) has a cam track in which the bolt (14) is guided.

15. The quick-release hose coupling according to claim 14, in which the cam track has a recess in which the bolt (14) is located when the coupling parts (10, 20) are coupled.

16. The quick-release hose coupling according to one of claims 13 to 15, in which a latching and/or locking of the swivel lever (24) in predetermined pivot positions is provided.

## Revendications

1. Raccord rapide pour flexibles servant à réunir et séparer au moins deux extrémités de conduites de fluides liquides ou gazeux, dont l'une au moins est un flexible élastique (30), comportant une première partie d'accouplement et une deuxième (10, 20) qui peuvent être couplées mécaniquement l'une avec l'autre, dans lequel
- une première partie d'accouplement (10) comporte au moins un piquage de tuyau (17) en saillie formant l'extrémité de conduite et
- la deuxième partie d'accouplement (20) comporte l'au moins un flexible (30) formant l'extrémité de conduite, dans lequel un insert tubulaire (31) est inséré à l'extrémité,
- l'au moins un piquage de tuyau (17) de la première partie d'accouplement (10) étant guidé à travers l'insert (31) de la deuxième partie d'accouplement quand les parties d'accouplement (10, 20) sont couplées, de sorte que l'insert (31) guide le piquage de tuyau (17),
**caractérisé en ce que**, lorsque les parties d'accouplement (10, 20) sont couplées, l'au moins un piquage de tuyau (17) dépasse dans la direction du flexible au-delà de l'insert (31) et
- une surface d'étanchéité est formée entre une surface d'enveloppe extérieure de l'au moins un piquage de tuyau (17) et une surface intérieure de l'au moins un flexible (30).

2. Raccord rapide pour flexibles selon la revendication 1, dans lequel un diamètre intérieur de l'insert (31) diminue dans la direction du flexible.

3. Raccord rapide pour flexibles selon la revendication 1 ou 2, dans lequel un diamètre extérieur de l'insert (31) diminue dans la direction du flexible.

4. Raccord rapide pour flexibles selon l'une des revendications 1 à 3, dans lequel l'insert (31) comporte, à son extrémité tournée dans la direction opposée au flexible, un collet qui dépasse vers l'extérieur.

5. Raccord rapide pour flexibles selon l'une des revendications 1 à 4, dans lequel une épaisseur de paroi de l'insert (31) diminue vers son extrémité tournée dans la direction du flexible.

6. Raccord rapide pour flexibles selon l'une des revendications 1 à 5, dans lequel la deuxième partie d'accouplement (10) comporte au moins une douille (222) destinée à recevoir l'extrémité de l'au moins un flexible (30) et à la positionner.

7. Raccord rapide pour flexibles selon la revendication 6, dans lequel le flexible (30) est pressé par l'insert (31) sur une paroi intérieure de la douille (222).

8. Raccord rapide pour flexibles selon l'une des revendications 1 à 7, dans lequel la première partie d'accouplement (10) comporte au moins deux piquages de tuyau (17) en saillie formant les extrémités de conduite et la deuxième partie d'accouplement (20) comporte au moins deux flexibles (30) dans chacun desquels un insert tubulaire (31) est inséré à l'extrémité, un des piquages de tuyau (17) étant introduit dans chacun des flexibles (30).

9. Raccord rapide pour flexibles selon la revendication 8, comportant au moins deux douilles (222), dans lequel chacun des flexibles (30) est introduit dans une douille (222) respective.

10. Raccord rapide pour flexibles selon la revendication 9, dans lequel les au moins deux douilles (222) sont formées dans un bloc de flexibles (22) commun qui est disposé dans la partie antérieure de la deuxième partie d'accouplement (10).

11. Raccord rapide pour flexibles selon l'une des revendications 1 à 10, dans lequel la première partie d'accouplement et la deuxième (10, 20) présentent des éléments de guidage qui guident les deux parties d'accouplement (10, 20) l'une vers l'autre de façon linéaire lors du couplage.

12. Raccord rapide pour flexibles selon l'une des revendications 1 à 11, dans lequel la première partie d'accouplement et la deuxième (10, 20) présentent un mécanisme de verrouillage en coopération.

13. Raccord rapide pour flexibles selon la revendication 12, dans lequel le mécanisme de verrouillage présente un levier pivotant (24) articulé sur l'une des deux parties d'accouplement (10, 20), qui est conçu comme un levier coudé avec une partie formant poignée (241) et une partie de verrouillage (242), laquelle partie de verrouillage (242) coopère avec un boulon disposé sur l'autre des deux parties d'accouplement (10, 20).

14. Raccord rapide pour flexibles selon la revendication 13, dans lequel la partie de verrouillage (242) présente une piste incurvée dans laquelle le boulon (14) est guidé.

15. Raccord rapide pour flexibles selon la revendication 14, dans lequel la piste incurvée présente un creux dans lequel le boulon (14) se trouve lorsque les parties d'accouplement (10, 20) sont couplées.

16. Raccord rapide pour flexibles selon l'une des revendications 13 à 15, dans lequel sont prévus un enclenchement et/ou un verrouillage du levier pivotant (24) dans certaines positions de pivotement.
